# EUROPEAN PATENT APPLICATION

(11) **EP 3 719 351 A1**
(43) Date of publication of application: **07.10.2020**
(21) Application number: 19167670.9
(22) Date of filing: 05.04.2019
(51) Int. Cl.: F16H 7/02, F16H 7/12, F16H 7/08

(54) **A BELT DRIVE SYSTEM FOR REDUCING MECHANICAL VIBRATIONS**

(71) Applicant: Leys, 9320 Erembodegem (BE)
(72) Inventor: LEYS, Luc, 9320 Erembodegem (BE)
(74) Representative: Gevers Patents

(57) **Abstract**

A belt drive system comprising a driving pulley and at least one driven pulley, the belt drive system further comprising a driving belt engaged with the driven pulley and the driving pulley to define a tensioned branch and a slacked branch, wherein the driving belt comprises an annular body made of elastomeric material, wherein the annular body is delimited by a radial pulley contacting surface configured to contact the driving pulley and the driven pulley, and by a radial back surface opposing the pulley contacting surface, wherein the back surface and the pulley contacting surface lie substantially parallel to each other, wherein the pulley contacting surface has a non-circular shape in an unstressed state.

## Description

### Technical Field

The present invention relates to a belt drive system comprising a driving pulley, at least one driven pulley, and a driving belt. The belt drive system is for example applied in a motor vehicle, for example coupled to the motor vehicle auxiliary assembly and engine such as an internal combustion engine or electromotor. The present invention in particular relates to belt drive systems arranged to reduce mechanical vibrations occurring in the driving belt such as to reduce noise and excessive wear of the driving belt.

### State of the art

In motor vehicles, belt drive systems are used to drive auxiliary assemblies of the motor vehicle by using the power generated by the motor vehicle engine such as an internal combustion engine or electromotor. Auxiliary assemblies for example comprise a camshaft configured to open and close the inlet and outlet valves of the engine, water pumps, power steering pumps, air conditioning compressors and the like. Belt drives typically comprise a driving pulley configured to be driven for example by a crankshaft of the motor vehicle engine, at least one driven pulley configured to drive the auxiliary assembly, and a driving belt engaged with the driven pulley and the driving pulley to define a tensioned branch and a slacked branch. As is known in the state of the art, the tensioned branch is the part extending from the driven pulley to the driving pulley in the direction of rotation of the driving belt. The slacked branch is the part of the driving belt beyond the driving pulley in the direction of rotation.

Belts drive systems of this type are subjected to mechanical oscillation excitations on account of torque fluctuations, for example due to torque fluctuations of the engine coupled to the driving pulley or for example due to torque fluctuations of the auxiliary assemblies coupled to the driven pulleys, or due to angular velocity and rotational speed changes during operation. The mechanical oscillation excitations exerted on the belt drive system particularly influence the tensioned branch of the driving belt. The tensioned branch of the driving belt can be seen as a chord of elastic material tensioned between the driven pulley and the driving pulley. The chord of elastic material has given resonance ranges determined amongst others by the following properties of the chord of elastic material: its length, its mass density, its tension and its elastic modulus. In these resonance ranges, oscillations of the elastic chord disadvantageously lead to audible noise and excessive wear of the driving belt. Solutions to reduce the above mentioned disadvantageous effects have been proposed in the state of the art. One solutions proposed in the state of the art is to ensure that the frequencies of mechanical oscillations exerted on the belt drive system are remote form the resonance frequency ranges of the driving belt, in particular of the tensioned branch of the driving belt. One particular approach that is proposed in the state of the art is to continuously change the resonance frequency ranges of the driving belt, in particular of the tensioned branch of the driving belt, upon rotating the driving belt through the belt drive system.

In the patent publication JP20000193037 a driving belt has therefore been provided where the mass density of the belt is changed along the circumferential direction of the driving belt. Upon rotating the belt, the mass density of the driving belt, in particular of the part of the driving belt in the tensioned branch changes, thereby continuously changing the resonance frequency ranges of the driving belt, in particular of the part of the driving belt in the tensioned branch. In the patent publication JPH07224905 a driving belt has been provided wherein the tension in the tensioned branch of the driving belt continuously changes, thereby continuously changing the resonance frequency ranges of the driving belt, in particular of the part of the driving belt in the tensioned branch. The change in tension is for example obtained by changing the thickness of the driving belt along its circumferential direction. In general in the above mentioned solutions of the state of the art, the driving belts are provided with non-uniform properties along their circumferential direction. It has been found that the complexity of the manufacturing process of these driving belts is substantially increased, therefore increasing the costs of the manufacturing process. Examples of complexities in the manufacturing process of non-uniform properties along the circumferential direction are the increased complexity in managing the required curing time and curing temperature. Parts of the driving belt having a lower mass density or having a reduced thickness for example require less curing time and/or lower curing temperatures than parts of the same driving belt having a higher mass density or an increased thickness. Furthermore it has been found that providing driving belts with non-uniform properties along their circumferential direction have a deteriorated mechanical properties, for example due to the incomplete curing of parts of the driving belt.

Other solutions have been provided in the state of the art, whereby the resonance frequency range of the driving belts, in particular of the tensioned branch of the driving belts, is continuously changed, and wherein conventional driving belts i.e. having uniform properties along its circumferential direction can be used. These solutions require the provision of specifically designed driving or driven pulleys that continuously change the tension in the driving belt, in particular in the tensioned branch of the driving belt. Patent publications US20070232426, DE102005040257 or WO2006002709 for example provide a non-circular shaped driving pulley comprising summits and valleys, for example respectively convex and concave parts. When rotating the driving pulley, the driving belt comes into contact first with a summit and subsequently with a valley. When contacting the summit, the driving belt is tensioned, in particular in the tensioned branch of the driving belt, whilst when contacting the valley, the driving belt is loosened, in particular in the tensioned branch of the driving belt. Alternative solutions in the state of the art, such as in patent publication DE19520508, use eccentrically arranged pulleys such as driving pulleys or additional pulleys to obtain the same effect. In general the above mentioned solutions are practically unviable as the belt drive systems require drastic modification to its pulley systems, requiring additional pulleys to be provided in the system or requiring the provision of non-circular or eccentric pulleys which tend to be mechanically unstable upon rotation and which are expensive non-standard components. It is desired to provide a belt drive system wherein mechanical vibrations of the driving belt are reduced, and wherein a conventional, i.e. round and non-eccentric, pulley system can be used.

### Detailed description of the invention

It is a goal of the present invention to provide a belt drive system wherein mechanical vibrations of the driving belt are reduced, and wherein the problems associated with the state of the art are alleviated. In particular the present invention aims to provide a belt drive system wherein mechanical vibrations of the driving belt are reduced, and wherein the associated cost for producing the belt drive system are reduced. Therefore, the present invention provides a belt drive system according to the first claim. The belt drive system comprises a driving pulley for example configured to be driven by an external device such as an engine, and at least one driven pulley for example driven by the driving pulley and configured to drive an external device such as an auxiliary assembly. The belt drive system further comprises a driving belt engaged with the driven pulley, for example with each of the at least one driven pulley, and the driving pulley to define a tensioned branch and a slacked branch. The driven pulley is driven due to the rotation of the driving pulley which is transduced into a rotation of the driven pulley via the tensioned branch of the driving belt. The driving belt comprises an annular body made of elastomeric material such as rubber, which is preferably cured. The rubber is preferably black rubber. The annular body has a thickness in a radial direction, a circumference in a circumferential direction and a width in an axial direction perpendicular to the radial and circumferential directions. The annular body is delimited by a radial pulley contacting surface configured to contact the driving pulley and preferably also the driven pulley, and further delimited by a radial back surface opposing the pulley contacting surface. The back surface and the pulley contacting surface lie substantially parallel to each other, for example the driving belt has a substantially constant thickness defined as the perpendicular distance between the two radial surfaces of the annular body i.e. the back surface and the pulley contacting surface. The driving belt, for example the pulley contacting surface, and the back surface, has a non-circular shape in an unstressed state. The non-circular shape is in particular the shape of driving belt, for example of the pulley contacting surface, and of the back surface, when observed in a cross-section with a plane perpendicular to the axial direction of the driving belt.

The present invention has the advantage that an economically viable belt drive system can be provided wherein the belt drive system reduces mechanical vibrations of the driving belt, thereby limiting noise and mechanical wear of the driving belt.

In particular it has been found that producing driving belts with uniform mass density and uniform thickness along its circumferential direction is an easy process, compared to the production process for producing non-uniform driving belts as proposed in the state of the art. Preferably the driving belts of the present invention are obtainable by applying the mandrels/moulds and associated manufacturing method as described in the patent application by Leys with application number EP17207128.4. Patent application EP17207128.4 is entirely included in the present patent application by reference. The production of the driving belts of the present invention thus requires a single curing time and curing temperature range for the entire belt, as opposed to the production methods of the state of the art where different parts of the belts require different curing times and curing temperature ranges due to the presence of the circumferential non-uniformities. The mechanical properties of the driving belts are therefore also improved, which reduces the risk of driving belt failure and associated costs.

Furthermore, conventional round pulleys can be used which are driven in a non-eccentric manner, thereby also reducing costs of the belt drive system.

The driving belts of the present invention have a non-circular shape in an unstressed state, i.e. when no elastic or plastic deformation is applied to the driving belt. Preferably, the driving belts are formed, i.e. cured into a non-circular shape, as opposed to for example plastically deformed into a non-circular shape after forming i.e. curing the driving belt. In particular, referring to the preferred manufacturing method of the present driving belts as discloses in patent application EP17207128.4, the driving belts have a non-circular shape corresponding to the non-circular shape of the mandrel used to manufacture the driving belts. In particular, the driving belts when in an unstressed state, for example after removing them from the non-circular shaped mould, exhibit a memory effect wherein, upon elastically deforming the driving belt, for example into a circular shape, the driving belt elastically returns to the non-circular shape in which it was manufactured. This memory effect is best visible when positioning the driving belts of the present invention on a frictionless surface such as a very slippery surface such as ice, or when suspending the driving belts of the present invention in a weightless environment. The non-circular shape of the driving belt is caused by the non-circular shape in which the driving belt was formed, i.e. cured. The elastomeric material, such as the rubber, of the driving belt is fixed into its formed, i.e. cured shape. By consequence, other elements comprised in the annular body such as reinforcing cords, are also fixed in the non-circular shape.

The belt drive system reduces vibrations of the driving belt, in particular of the tensioned branch of the driving belt, because upon rotating the driving belt throughout the belt drive system, i.e. along the driving pulley, the tension in the driving belt, in particular the tension in the tensioned branch of the driving belt, is continuously varied, thereby continuously varying the resonance frequency range of the driving belt, in particular of the tensioned branch of the driving belt. The variation of the tension in the driving belt, in particular in the tensioned branch of the driving belt, is similar as the variation in tension produced in the conventional circumferentially uniform driving belt of the state of the art when co-operating with the non-circular shaped driving pulley.

As an example, the non-circular shape is substantially oval, wherein the driving belt in an unstressed state has a maximal diameter in a first direction and a minimal diameter in a second direction perpendicular to the first direction. Upon rotating the driving belt throughout the belt drive system, the driving belt rotates within a single rotational cycle from a first position with maximal tension, to a second position with minimal tension, to a third position with maximal tension, to a fourth position with minimal tension. The points of maximal tension occurring when the driving belt extends between the driving pulley and the driven pulley with its second direction i.e. the direction corresponding to the minimal diameter parallel to the direction between the driven pulley and the driving pulley. The points of minimal tension occurring when the driving belt extends between the driving pulley and the driven pulley with its first direction i.e. the direction corresponding to the maximal diameter parallel to the direction between the driven pulley and the driving pulley According to an embodiment of the present invention, the non-circular shape (in the unstressed state) comprises at least one concave part and at least one convex part. Concave parts of the non-circular shape can be seen as valleys, whilst convex parts can be seen as summits. In particular, the convex and concave parts have to be seen with the pulley contacting surface pointing radially inward and the back surface pointing radially outward, as opposed to a driving belt that is 'pulled inside-out'. The convex and concave parts can for example be interpreted as parts where respectively the back surface and the pulley contacting surface bulge. An example of a non-circular shape in an unstressed state is an undulated shape, for example a circular shape superimposed with a substantially sinusoidal wave. The undulated shape causes the tension of said tensioned branch to vary between a maximum and a minimum in a periodic manner. Upon stretching, i.e. elastically deforming the driving belt, such as to be positioned over the pulleys such as over the driven pulley and the driving pulley, the undulations of the driving belt are flattened due to the stretching of the driving belt. Therefore, the driving belt in the slacked branch has an undulated shape having a first amplitude, the driving belt in the tensioned branch has an undulated shape having a second amplitude, and the first amplitude is preferably bigger than the second amplitude. A further example of a non-circular shape is a 'U' or 'C' shape. Providing convex and concave parts, as opposed to an entirely convex non-circular shape such as an oval shape, has the advantage that the variation of the tension in the driving belt, when driven throughout the belt drive system, is more pronounced. In particular, the pulleys, in particular the driving pulley, co-operates with the pulley contacting surface so that the tension of said tensioned branch varies between a maximum when a concave part of said non-circular surface of the pulley contacting surface contacts said driving pulley and a minimum when a convex part of said non-circular surface of the pulley contacting surface contacts said driving pulley. Without wanting to be bound by a theory, it its believed that this effect occurs because the convex part of the non-circular shape better matches with the convex shape of the pulleys such as the driving pulley, whilst the concave parts of the non-circular shape have to be bent into a convex part in order to conform to, and move along, the pulleys such as the driving pulley.

According to an embodiment of the present invention, the mechanical resonance frequency of the tensioned branch of the driving belt, changes upon rotating the driving belt along the driving pulley due to the changing tension in the tensioned branch. This embodiment states a first remarkable effect of the belt drive system of present invention, which is caused by the varying tension in the tensioned branch. Another remarkable effect of the belt drive system according to some embodiments of the present invention, as will be explained further below, is to counter the mechanical vibrations caused by the external devices such as the engine or the auxiliary assemblies.

According to an embodiment of the present invention, the driving belt is in an unstressed state when the driving belt is disengaged with the driven pulley and the driving pulley. When positioning the driving belt onto the pulleys, for example over the driving pulley and the driven pulley, the driving belt is elastically stretched and is thus not in an unstressed state. Upon removing the driving belt from the pulleys, the driving belt can elastically relax by elastically deforming back into its non-circular shape. Preferably, in the unstressed state also no frictional forces are applied to the driving belt, enabling the total elastic relaxation of the driving belt. Preferably the driving belt in an unstressed state when the driving belt is not elastically deformed. Preferably the driving belt in an unstressed state when the driving belt is not elastically or plastically deformed.

According to an embodiment of the present invention, the driving belt comprises reinforcing cords, for example steel cords, extending circumferentially throughout the annular body of the driving belts, wherein the reinforcing cords lie parallel to the back surface and the pulley contacting surface. The reinforcing cords thus also have the non-circular shape in an unstressed state. In particular when the driving belts are obtained using the manufacturing process of patent application EP17207128.4, the reinforcing cords are embedded into the cured elastomeric material, i.e. the cured rubber, by forming, i.e. curing, the uncured elastomeric material, i.e. the uncured rubber, together with the reinforcing cords, on the non-circular shaped mandrel.

According to an embodiment of the present invention, the driving belt is obtainable by
- providing a rigid mandrel substantially extending in an axial direction and delimited by a mandrel outer surface having the non-circular shape in a cross-section with a plane perpendicular to the axial direction,
- applying a slab of elastomeric material, preferably rubber, preferably uncured rubber, preferably provided with reinforcing cords, on the mandrel outer surface such that the slab of elastomeric material has the non-circular shape in a cross-section with a plane perpendicular to the axial direction,
- creating the driving belt having a pulley contacting surface lying adjacent to the mandrel outer surface by pressing the slab of elastomeric material against the mandrel outer surface, preferably simultaneously curing the elastomeric material.

The belt drive systems wherein the driving belts are obtainable by the above mentioned method, have a non-circular shape in the unstressed state. Preferably, the rigid mandrel is the mandrel as disclosed in the patent application by Leys with application number EP17207128.4 which is incorporated herein by reference.

According to an embodiment of the present invention, the pulley contacting surface is provided with grooves, which form driving belt teeth, and the driving pulley and the driven pulley are provided with corresponding teeth configured to co-operate with the grooves provided in the pulley contacting surface of the driving belt. In many industrial applications the grooves are axially extending grooves such as to form cogged belts or timing belts. Preferably, the grooves provided in the pulley contacting surface are circumferential grooves, such as to form a micro-V driving belt. The pulley contacting surface of the driving belt is provided with the grooves. Equivalently it can be stated that the pulley contacting surface is the virtual surface interconnecting adjacent teeth on the driving belt. According to an embodiment of the present invention, the driven pulley and/or the driving pulley exerts a first pulsating load profile on the driving belt, in particular on the tensioned branch of the driving belt. A pulsating load profile is preferably a load profile that is not constant, for example a load profile that is substantially sinusoidal as a function of time or as a function of angular rotation of the pulleys for example of the driving pulley. The first pulsating load profile is for example exerted by external devices such as the motor vehicle engine or auxiliary assemblies respectively connected to the driving pulley and the driven pulley. The external machines often exhibit a pulsating torque profile, i.e. a torque profile that is not constant. The pulsating torque profile of the external devices results in the first pulsating load profile in the driving belt via the pulleys. The variation of the tension in the driving belt, in particular in the tensioned branch presents a second pulsating load profile. The second pulsating load profile is caused by the interaction of non-circular shaped driving belt and the pulleys, in particular the driving pulley. In particular the second load profile shows a high load level, i.e. a high tension level in the driving belt, when a concave part of the driving belt co-operates with the pulleys, in particular with the driving pulley. The non-circular shape of the driving belt is chosen such that the second load profile cancels the first load profile. As an example, for a belt drive system wherein the first load profile is a first sinusoidal, the non-circular shape of the driving belt is chosen such that the second load profile is also a sinusoidal, preferably with the same amplitude as the first sinusoidal, but which is shifted 180° in phase with respect to the first sinusoidal. As an example, the non-circular shape of the driving belt is chosen and positioned on the pulleys such that when the first load profile exerts a maximal tension on the driving belt, the second load profile exerts a minimal tension on the driving belt and vice versa.

According to an embodiment of the present invention the driving pulley and the driven pulley have a circular, e.g. round shape and wherein the driving pulley and the driven pulley have a centered axis of rotation, for example centrally positioned rotational shafts. The present invention accentuates that in the belt drive system of the present invention, there is no need to provide specially designed or additional pulleys. Furthermore, there is no need to provide eccentric pulleys which are mechanically unstable when the pulley rotates at a high frequency. As a consequence, the belt drive system of the present invention is much cheaper. Furthermore, it is possible to change the external devices connected to the belt drive system, for example by adding a new auxiliary assembly such a new water pump, without requiring costly adaptations to the belt drive system. The belt drive system of the present invention can be easily adapted without requiring complex adaptations to the pulley systems, i.e. by merely replacing the old driving belt with a new driving belt with an adapted non-circular shape (in the unstressed state), for example such as to create a required second pulsating load profile.

According to an embodiment of the present invention the driving belt has a substantially constant mass density along its circumferential direction. According to the present invention the driving belt has a substantially constant thickness along its circumferential direction. Preferably, the driving belt of the present invention has uniform material and mechanical properties along its circumferential direction. Producing driving belts with uniform mass density and uniform thickness along its circumferential direction is an easy process, compared to the production process for producing non-uniform driving belts, for example because the curing time and curing temperatures are the same for the entire driving belt.

According to an embodiment of the present invention, the belt drive system is coupled to an auxiliary assembly and engine of a motor vehicle, i.e. the driven pulley drives an auxiliary assembly and the driving pulley is driven by the crankshaft of the engine such as an internal combustion engine or electromotor. The belt drive system can be applied in any auxiliary assembly with any type of engine.

It is a further object of the present invention to provide the use of the belt drive system to reduce mechanical vibrations, i.e. to reduce the noise generated by the driving belt when rotating throughout the belt drive system and to reduce the wear of the driving belt when rotating throughout the belt drive system.

### Figures

Figure 1 shows a cross-section of the belt drive system according to the present invention in a plane perpendicular to the axial direction of the driving belt.
Figure 2 shows a section of a non-circular shaped driving belt
Figure 3 shows an example of a first and second pulsating torque profile
Figure 4 shows a first step in the process for manufacturing the driving belts with non-circular shape in an unstressed state
Figure 5 shows an optional second step in the process for manufacturing the driving belts with non-circular shape in an unstressed state
Figure 6 shows a third step in the process for manufacturing the driving belts with non-circular shape in an unstressed state
Figures 7a-7d show different non-circular shapes for example of the mandrel for manufacturing the driving belts

### Description of the figures

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

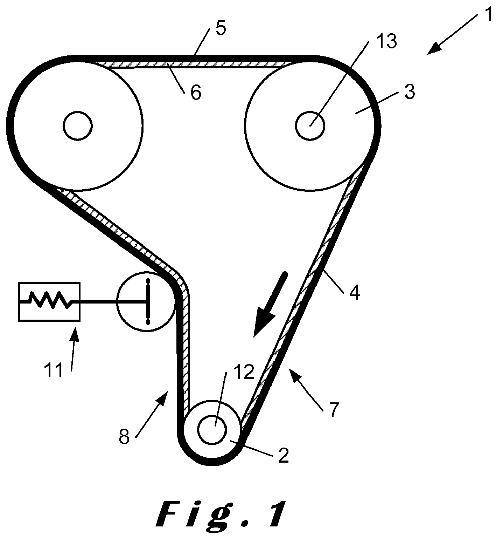

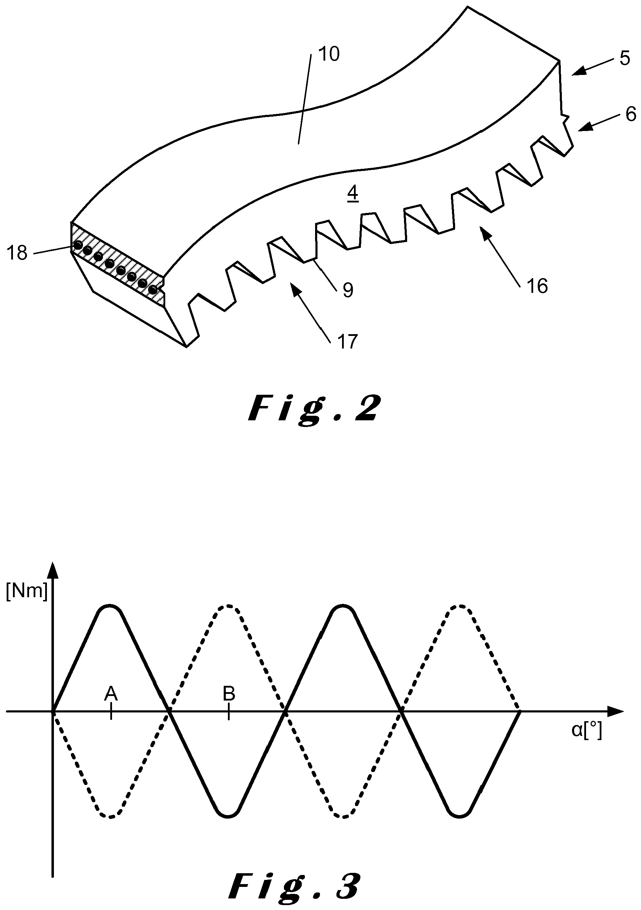

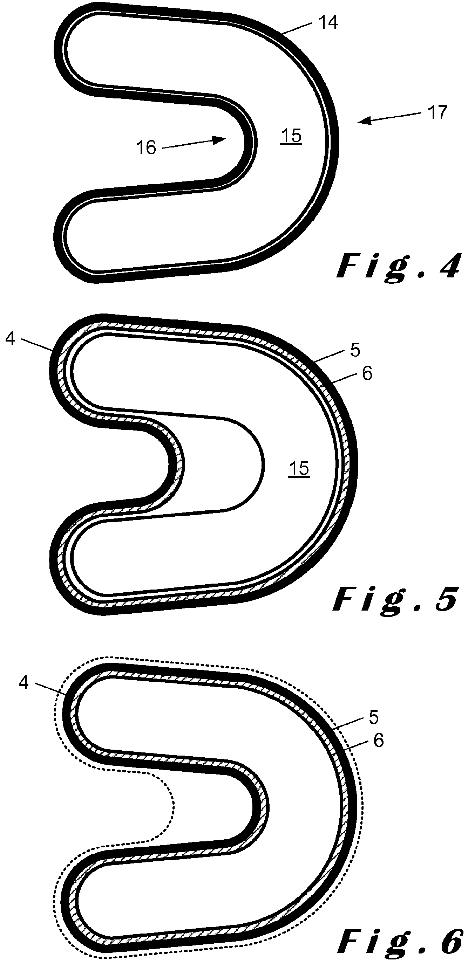

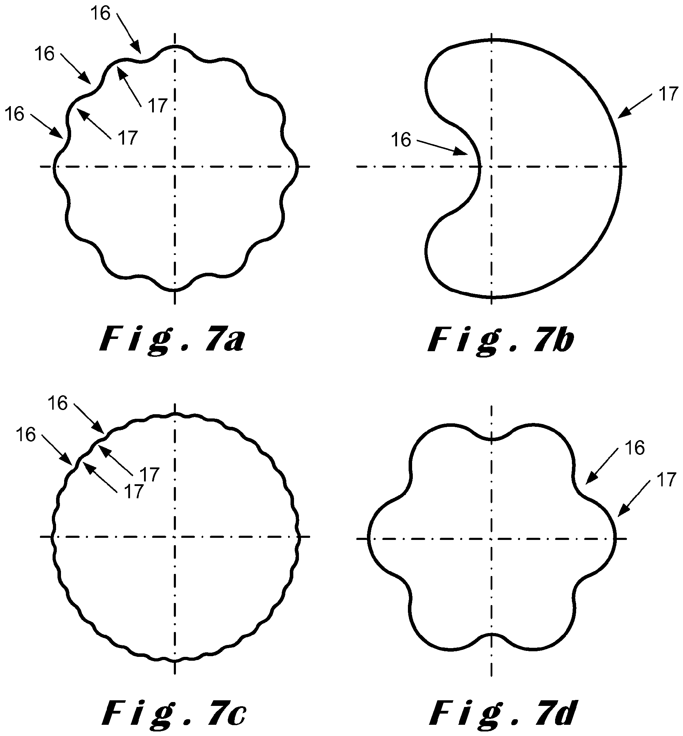

Figure 1 shows a cross-section of the belt drive system 1 according to the present invention in a plane perpendicular to the axial direction of the driving belt 4. The belt drive system 1 comprises a circular driving pulley 2 which is driven by a motor vehicle engine (not shown) via the centrally positioned rotation shaft 12, for example coupled to the crankshaft (not shown). The driving pulley 2 is shown to rotate in a clockwise direction. The belt drive system 1 further comprises a circular driven pulley 3 coupled to an auxiliary assembly (not shown) via a centrally positioned rotation shaft 13. The auxiliary system for example comprises a camshaft designed to control a multiplicity of spring-type timing valves of the motor vehicle engine. The driven pulley 3 is rotated in a clockwise direction due to the transmission of the rotation of the driving pulley 2 to the driven pulley 3 via the driving belt 4 which advances in the direction of the arrow as shown in figure 1. The driving belt is therefore provided with a load bearing base part 5, for example comprising reinforcing cords, and a toothed part 6 comprising grooves configured to co-operate with teeth that are provided on the circumferences of the pulleys (not shown). The driving belt 4 has a tensioned branch 7 defined between the driven pulley 3 and the driving pulley 2, and a slacked branch 8. The slacked branch 8 is conventionally tensioned by using a belt tensioner 11. It is the aim of the present invention to reduce mechanical vibrations that occur in the driving belt 4, in particular that occur when the mechanical vibrations exerted onto the belt drive system 1 for example by external devices such as the auxiliary assembly, are near or in the mechanical resonance frequency range of the driving belt 4, in particular in the tensioned parts of the driving belt 4 such as especially in the tensioned branch 7 of the driving belt 4. It is furthermore the aim of the present invention to provide a cost efficient belt drive system 1. The invention therefore provides a driving belt 4 with a non-circular shape taken in a plane perpendicular to the axial direction when the belt is in an unstressed state as shown in figure 2. The working principle of the belt drive system 1 according to the present invention is explained in figure 3 further below. The non-circular shaped driving belts 4 are preferably obtained by forming i.e. curing, the driving belt 4, by curing the elastomeric material and embedded reinforcing cords, on a mandrel having a non-circular mandrel outer surface, i.e. having a non-circular shaping surface. Preferably, the manufacturing process and mandrel of the patent application EP17207128.4 are used. An example of the manufacturing process is shown in figures 4-6 and will be explained below. Examples of non-circular shapes are shown in figure 7 and will be explained below.

Figure 2 shows a circumferential section of a driving belt 4 having a non-circular shape in the unstressed state. The driving belt 4 comprises a load bearing part 5 comprising reinforcing cords 18 embedded in elastomeric material such as rubber, and a teethed part 6 separated from the base part 5 by an interface layer. The base part 5 extends in the radial direction, i.e. in the belt thickness, between a back surface 10 and the interface layer. The teethed part 6 extends in the radial direction between the interface layer and a pulley contacting surface 9. The pulley contacting surface 9 is provided with grooves, wherein the grooves define the teeth of the driving belt 4. The pulley contacting surface can equivalently be interpreted as the virtual surface interconnecting the free ends of the teeth of the driving belt 4. The grooves provided in the pulley contacting surface 9 are arranged to engage with the teeth provided on the pulleys 2, 3 of the belt drive system 1. The driving belt 4 has a substantially constant thickness along its entire circumference as defined as the perpendicular distance between its back surface 10 and its parallel pulley contacting surface 9. Preferably, the base part 5 has a substantially constant thickness along the circumferential direction. Preferably the teethed part 6 has a substantially constant thickness along the circumferential direction. The driving belt 4 has a substantially constant mass density and elastic modulus along its entire circumference. The circumferential section of the driving belt 4 as shown in figure 2 has one convex part 17 i.e. a part where the back surface 10 bulges out and one concave part 16 i.e. a part where the pulley contacting surface 9 bulges out. Preferably, the circumferential section of the driving belt 4 as shown in figure 2 is repeated multiple times and interconnected such as to form an annular element i.e. a closed loop element. The resulting non-circular shape of the driving belt 4 will then be a circle superimposed with a substantially sinusoidal wave along its circumference. Preferably, the back surface 10, the reinforcing cords 18 and the pulley contacting surface 9 all follow the same non-circular shape.

In a first embodiment, the variation in tension in the driving belt 4, in particular in the tensioned branch 7 of the driving belt 4, is configured to continuously change the resonance frequency range of the driving belt 4, in particular of the tensioned branch 7 of the driving belt 4. In a second embodiment, the variation in tension in the driving belt 4, in particular in the tensioned branch 7 of the driving belt 4, is configured to cancel a first pulsating torque profile that is exerted on the belt drive system 1 by an external device such as the engine or the auxiliary assembly. An example of the second embodiment is shown in figure 3. Figure 3 represents with a solid line the first pulsating torque profile exerted on the belt drive system 1. The first pulsating torque profile is for example imposed on the rotational shaft 12 of the driving pulley 2 by the coupled engine. The amount of torque, shown in the vertical axis is not constant as a function of the angle of rotation α of the driving pulley 2. The driving pulley 2 is for example subjected to a maximal torque at rotational position A and to a minimal torque at position B. By appropriately designing the undulated profile of the driving belt 4, it is possible to obtain an induced torque represented by a dashed line, equal and in phase opposition with respect to the first torque profile. A similar graph could be drawn showing the tension in the driving belt 4 as a function of the angle of rotation of the driving pulley 2. In particular when the first torque profile is positive, the torque tends to accelerate the driving pulley 2 and thus tends to increase the tension in the tensioned branch 7 of the driving belt 4. The driving belt 4 is mounted in such a way that, during the above mentioned acceleration, the convex parts 17 of the driving belt 4 will co-operate with the driving pulley 2 thereby reducing the tension in the driving belt 4, in particular in the tensioned branch 7 of the driving belt 4, in comparison to when the concave part 16 of the driving belt 4 co-operates with the driving pulley 2. It has been found that the co-operation of the driving belt 4 with the driven pulley 3 has a lesser effect on the tension in the driving belt 4, in particular in the tensioned branch 7 of the driving belt 4, than the co-operation of the driving belt 4 and the driving pulley 2. Nonetheless, the distance between the driving pulley 2 and the driven pulley 3, or equivalently the wavelength of the undulation pattern on the driving belt 4, can be adapted such that the driving belt 4 co-operates with both the driving pulley 2 and the driven pulley 3 such as to obtain the desired second load/torque profile. Also in the first embodiment, the distance between the driving pulley 2 and the driven pulley 3, or equivalently the non-circular shape such as the wavelength of the undulation pattern on the driving belt 4, can be adapted such as to ensure that a variation in tension occurs in the driving belt 4, in particular in the tensioned part 7 of the driving belt 4.

Figures 4-6 show a preferred embodiment to obtain the driving belts 4 as used in the belt drive system 1 of the present invention. The entire manufacturing process and the corresponding mandrels/moulds are disclosed in patent application EP17207128.4. In a first step, as shown in figure 4, a rigid, for example metallic, mandrel 15 is provided. The mandrel 15 is shown in a cross-section with a plane perpendicular with the axial direction. The mandrel 15 has a non-circular outer mandrel surface. The mandrel outer surface has a concave part 16, i.e. an indentation, and a convex part 17, i.e. a bulge. The non-circular shape of the mandrel outer surface is chosen equal to the non-circular shape to be imparted to the driving belt 4. Figures 7a - 7d show different non-circular shapes comprising convex parts 17 and concave parts 16. The outer mandrel surface is preferably provided with a set of protrusions configured to impart a grooved structure onto the driving belt 4 after curing. The protrusions for example run circumferentially along the mandrel outer surface such as to create micro-V driving belts. A slab 14 of uncured elastomeric material, such as uncured rubber, preferably embedded with reinforcing cords 18, is applied, for example wound, around the mandrel 15 such that the slab 14 lies adjacent to the mandrel outer surface. The slab 14 preferably has a substantially constant thickness. The slab 14 is subjected to a curing process, i.e. to an elevated curing temperature and/or curing pressure for a pre-determined curing time. During the curing process the slab 14 is pushed against the mandrel outer surface, such as to form the grooves in the slab. By curing, the slab 14 is transformed into the driving belt 4 comprising the base part 5 and the teethed part 6. Although not essential, the removal of the driving belt 4 from the mandrel outer surface is facilitated by partially pulling the driving belt 4 radially out of the concave parts 16 of the mandrel 15 such as to reshape the driving belt 4 in a shape that is larger than the non-circular shape of the mandrel 15. This step is shown in figure 5. The reshaping step requires to apply a limited amount of elastic deformation to the driving belt 4. The driving belt 4 can subsequently easily be removed from the mould 15 in the axial direction. Figure 6 shows the automatic reshaping of the driving belt 4 into the non-circular shape in which the driving belt 4 was formed when the driving belt is in an unstressed state. The automatic reshaping for example takes place after performing the step of removing the driving belt 4 from the mandrel outer surface as shown in figure 5. The shape of the driving belt 4 in a stressed state, e.g. where the driving belt 4 is elastically deformed, is shown as a dotted line in figure 6. Due to the memory effect, the driving belt 4 elastically relaxes to the non-circular shape as shown in figure 6.

## Claims

1. A belt drive system (1) comprising a driving pulley (2) and at least one driven pulley (3), the belt drive system (1) further comprising a driving belt (4) engaged with the driven pulley (3) and the driving pulley (2) to define a tensioned branch (7) and a slacked branch (8), wherein the driving belt (4) comprises an annular body made of elastomeric material, wherein the annular body is delimited by a radial pulley contacting surface (9) configured to contact the driving pulley (2), and by a radial back surface (10) opposing the pulley contacting surface (9), wherein the back surface (10) and the pulley contacting surface (9) lie substantially parallel to each other, wherein the driving belt (4) has a non-circular shape in an unstressed state.

2. The belt drive system (1) according to the preceding claim, wherein the non-circular shape comprises at least one concave part (16) and at least one convex part (17).

3. The belt drive system (1) according to the preceding claim, wherein said driving pulley (2) co-operates with said pulley contacting surface (9) so that the tension of said tensioned branch (7) varies between a maximum when a concave part (16) of said non-circular surface of the pulley contacting surface (9) contacts said driving pulley (2) and a minimum when a convex part (17) of said non-circular surface of the pulley contacting surface (9) contacts said driving pulley (2).

4. The belt drive system (1) according to any one of the preceding claims, wherein the mechanical resonance frequency of the tensioned branch (7) of the driving belt (4), changes upon rotating the driving belt (4) along the driving pulley (2) due to the changing tension in the tensioned branch (7).

5. The belt drive system according to any one of the preceding claims, wherein the driving belt (4) is in an unstressed state when the driving belt (4) is disengaged with the driven pulley (3) and the driving pulley (2).

6. The belt drive system (1) according to the preceding claim, wherein the driving belt (4) is in an unstressed state when the driving belt (4) is not elastically deformed.

7. The belt drive system (1) according to any one of the preceding claims, wherein the non-circular shape in an unstressed state is an undulated shape, so that the tension of said tensioned branch (7) varies between a maximum and a minimum in a periodic manner.

8. The belt drive system (1) according to any one of the preceding claims, wherein the driving belt (4) comprises reinforcing cords (18) extending circumferentially throughout the annular body of the driving belt (4), wherein the reinforcing cords (18) lie parallel to the back surface (10) and the pulley contacting surface (9).

9. The belt drive system (1) according to any one of the preceding claims, wherein the driving belt (4) is obtainable by
• providing a rigid mandrel (15) substantially extending in an axial direction and delimited by a mandrel outer surface having the non-circular shape in a cross-section with a plane perpendicular to the axial direction,
• applying a slab (14) of elastomeric material, preferably provided with reinforcing cords (18), on the mandrel outer surface such that the slab (14) of elastomeric material has the non-circular shape in a cross-section with a plane perpendicular to the axial direction, and
• creating the driving belt (4) having the pulley contacting surface (9) lying adjacent to the mandrel outer surface by pressing the slab (14) of elastomeric material against the mandrel outer surface, preferably simultaneously curing the elastomeric material.

10. The belt drive system (1) according to any one of the preceding claims, wherein the pulley contacting surface (9) is provided with grooves which form driving belt teeth, and wherein the driving pulley (2) and the driven pulley (3) are provided with corresponding teeth configured to co-operate with the grooves provided in the pulley contacting surface (9) of the driving belt (4).

11. The belt drive system (1) according to the preceding claims, wherein the grooves provided in the pulley contacting surface (9) are circumferential grooves, such as to form a micro-V driving belt.

12. The belt drive system (1) according to any one of the preceding claims, wherein the driven pulley (3) and/or the driving pulley (2) exerts a first pulsating load profile on tensioned branch (7) of the driving belt (4), wherein the variation of the tension in the tensioned branch (7) due to the non-circular shape of the driving belt (4) presents a second load profile, and wherein the non-circular shape of the driving belt (4) is chosen such that the second load profile cancels the first load profile.

13. The belt drive system (1) according to any one of the preceding claims, wherein the driving pulley (2) and the driven pulley (3) have a circular shape and wherein the driving pulley (2) and the driven pulley (3) have a centered axis of rotation (12, 13).

14. The belt drive system (1) according to the preceding claims, wherein the driving belt (4) has a substantially constant mass density along its circumferential direction.

15. Use of the belt drive system (1) according to any one of the preceding claims to reduce mechanical vibrations.
